# EUROPEAN PATENT SPECIFICATION

(11) **EP 1 731 387 B1**
(45) Date of publication and mention of the grant of the patent: **29.05.2013**
(21) Application number: 05720446.3
(22) Date of filing: 10.03.2005
(51) Int. Cl.: B60R 22/48, B60R 22/34, B60R 22/44

(54) **WEBBING WINDER**
GURTAUFROLLER
ENROULEUSE DE SANGLES

(30) Priority: 01.04.2004 JP 2004109315
(43) Date of publication of application: 13.12.2006
(73) Proprietor: Kabushiki Kaisha Tokai-Rika-Denki-Seisakusho, Niwa-gun, Aichi-ken 480-0195 (JP)
(72) Inventor: ASAGIRI, Katsuki, K.K. Tokai-Rika-Denki-Seisakusho, Niwa-gun, Aichi 4800195 (JP); MORI, Shinji, K.K. Tokai-Rika-Denki-Seisakusho, Niwa-gun, Aichi 4800195 (JP); SAITO, Takuhiro, K.K. Tokai-Rika-Denki-Seisakusho, Niwa-gun, Aichi 4800195 (JP)
(74) Representative: Fuhlendorf, Jörn
(86) International application number: PCT/JP2005/004175
(87) International publication number: WO 2005/097561

(56) References cited:
- EP-A- 1 382 497
- DE-U1- 20 315 870
- DE-U1- 29 500 807
- JP-A- 2001 180 440
- JP-A- 2001 225 720
- JP-A- 2004 042 782
- JP-A- 2005 028 970
- JP-U- 2 071 055

## Description

### Technical Field

The present invention relates to a webbing retractor according to the preamble of claim 1.

### Background Art

A seat belt device for restraining a vehicle occupant includes a webbing retractor. Some webbing retractors have a mechanism for alleviating or eliminating excessive feeling of pressure while the vehicle occupant is restrained by the webbing, and a pretensioner mechanism. The former mechanism is sometimes referred to as a tension reducing mechanism. In case of rapid reduction of the vehicle and the like, the pretensioner mechanism eliminates slight looseness which is referred to as "slack" of the webbing by having a spool to take up the webbing by a predetermined amount, and increases restraining ability of the webbing so as to have the body of the vehicle occupant further securely restrained. Motor retractors for implementing the above functions by a motor are also known. Examples of such motor retractors are shown in Patent Documents 1 and 2.

Such motor retractors are advantageous in the following features. For example, the motor retractor serves as a tension reducer and a pretensioner, and also helps taking-up and pulling-out of the webbing for normal fastening operation of the webbing.

In recent years, some motor retractors detect distance between the vehicle on which they are mounted and another vehicle or obstacles ahead using a forward monitor device such as a distance sensor. If the distance is found smaller than a threshold distance, the motor retractor actuates a motor to have the spool to rotate in a taking-up direction by the rotational force of the motor. Such a motor retractor includes a clutch disposed between an output shaft of the motor and the spool. The clutch allows one-way transmission of rotation from the output shaft of the motor to the spool so that rotation of the spool cannot be transmitted to the motor.

In such conventional motor retractors, the clutch includes an adaptor integrally connected to the spool, a rotating body rotatably supported by the adapter and rotated by the driving force from the motor, and a pawl supported by the rotating body. When the rotating body rotates, the pawl engages the adapter so as to transmit the rotation of the rotating body to the adapter.
Patent Document 1: Japanese Patent Application Laid-Open No. 2001-130376
Patent Document 2: Japanese Patent Application Laid-Open No. 2001-347923

A webbing retractor comprising the features of the preamble of claim 1 is disclosed in EP 1 382 497 A according to which all components of the clutch are supported by the spool via an adaptor.

### Disclosure of the Invention

### Problems to be Solved by the Invention

In the clutch of the motor retractor thus structured, the components of the clutch, including the adaptor, rotating body, pawl and the like, are supported directly or indirectly on the spool. In this structure, the components of the clutch may prevent smooth rotation of the spool, which may make pulling-out and taking-up operation of the webbing for ordinary use awkward.

In view of the aforementioned, there is a demand for a webbing retractor which allows one-way transmission of rotation from the motor by using a clutch, as well as achieves improved operation of pulling-out and taking-up of the webbing for ordinary use.

### Means for Solving the Problems

Means for solving the problems are provided by a webbing retractor including the features of claim 1.

The webbing retractor includes a clutch for transmitting rotation of the motor to the spool. The clutch has a rotating body which rotates when rotation of the motor is transmitted thereto, and a lock bar provided at the rotating body which engages the spool so as to transmit the rotation of the rotating body in one of axial directions thereof to the spool. The lock bar is normally held in a disengaged position with the spool. Thus, relative rotation between the rotating body and the spool is normally permitted so that rotation generated at the spool is not transmitted to the motor.

When a vehicle occupant seated at a vehicle seat pulls out the webbing accommodated in the webbing retractor of the present invention, the spool is rotated and the webbing is pulled out. Then the vehicle occupant puts on the webbing and, for example, engages a tongue plate attached to the webbing to a buckle device to wear the webbing.

Upon rotation of the motor, the rotating body of the clutch is rotated in one of the axial directions thereof (taking-up direction). When the rotating body is rotated in this direction, the lock bar attached to the rotating body engages the spool such that the rotation of the rotating body in this direction is transmitted to the spool via the lock bar. Then, the spool is rotated in this direction.

When the motor is rotated in the reverse direction, the rotating body of the clutch is rotated in the other of the axial directions thereof. When the clutch is rotated in this direction (pulling-out direction), the lock bar attached to the rotating body is moved to and held at a disengaged position with the spool. Thus, relative rotation of the rotating body and the spool is allowed again, and the spool can be rotated freely.

Note that, in this webbing retractor, the rotating body and the lock bar, which are the clutch components, are not supported by the spool but by the case. Thus, in this webbing retractor, unless the rotating body and the spool are connected by the lock bar, the spool can rotate independently of the rotating body and the lock bar which are the clutch components. Such a structure realizes reliably smooth rotation of the spool and improved operation of pulling-out and taking-up of the webbing for ordinary use.

The webbing retractor includes a spool on which webbing for restraining a vehicle occupant can be retracted so as to be taken up and can be pulled out, a motor, and a clutch which is mechanically interposed between the motor and the spool for transmitting rotation of the motor to the spool so as to rotate the spool in the direction in which the webbing is taken up and disconnecting the transmission of the rotation generated at the spool so as to prevent the rotation being transmitted to the motor. The clutch of the webbing retractor is provided coaxially with the case and the spool. The clutch includes: a rotating body provided coaxially with the spool, the rotating body rotating when rotation of the motor is transmitted thereto; a slider which is held on the case through frictional force and can move a predetermined distance relative to the rotating body; and a lock bar. The lock bar is provided on the rotating body, normally urged in a direction of engagement with the spool and normally held in a disengaged position from the spool by the slider, when the rotating body is rotated in the direction in which the webbing is taken up, the lock bar moving apart from the slider so as to be released from the held state, engaging the spool due to the urging force, transmitting the rotation of the rotating body in the direction in which the webbing is taken up to the spool, the lock bar permitting relative rotation between the spool and the rotating body in the direction in which the webbing is taken up, when the rotating body is rotated in a direction in which the webbing is pulled out, the lock bar moving toward the slider and is moved to the disengaged position and held there by the slider. The rotating body is supported by the case.

Further, if there is an obstacle ahead of the running vehicle, for example, and the space between the vehicle and the obstacle (i.e., the distance between the vehicle and the obstacle) becomes within a threshold range, the motor begins to rotate and the rotating body of the clutch is rotated in the direction in which the webbing is taken up. Here, the slider is held on the case through the frictional force, and thus the rotating body moves relative to the slider in a predetermined distance, and the lock bar provided at the rotating body moves apart from the slider. The lock bar engages the spool by the urging force, the rotation of the rotating body in the direction in which the webbing is taken up is transmitted to the spool via the lock bar, and the spool is rotated in the direction in which the webbing is taken up. Thus, the webbing is taken up on the spool and slight looseness ("slack") of the webbing while the vehicle occupant wears the webbing is eliminated. In this manner, the ability of the webbing for restraining the body of the vehicle occupant can be improved.

In this state, the lock bar allows relative rotation between the spool and the rotating body in the direction in which the webbing is taken up. Thus, as described above, under a condition in which the slack is eliminated, when a vehicle crash becomes inevitable, the spool may also be forcibly rotated in the direction in which the webbing is taken up using another pretensioner device and the like. In this case, the ability of the webbing for restraining the body of the vehicle occupant can further be improved, and damage that would have been caused to a vehicle occupant at the time of vehicle crash can be minimized.

If the risk of vehicle crash as described above is avoided, the motor is driven to rotate in the reverse direction and the rotating body of the clutch is rotated in a direction in which the webbing is pulled out. Here, the slider is held on the case through the frictional force, and the rotating body moves relative to the slider in a predetermined distance, and the lock bar provided at the rotating body moves toward the slider. The lock bar is again moved to and held at the disengaged position with the spool. Thus, relative rotation of the rotating body and the spool is allowed again, and the spool can be rotated freely.

Note that, in this webbing retractor, the rotating body, the slider and the lock bar, which are the clutch components, are not supported by the spool but by the case. Thus, in this webbing retractor, unless the rotating body and the spool are connected by the lock bar, the spool can rotate independently of the clutch (the rotating body, the slider and the lock bar). Such a structure realizes reliably smooth rotation of the spool and improved operation of pulling-out and taking-up of the webbing for ordinary use.

In the webbing retractor, when the gear wheel is rotated by the rotation of the motor, the rotation of the gear wheel is transmitted to the rotor via the spring pawl, and the rotor is rotated. The lock bar is supported by the rotor. Upon rotation of the rotor in one of the axial directions thereof, the lock bar engages the spool. Upon rotation of the rotor in the other of the axial directions thereof, the lock bar is moved to and held at a disengaged position with the spool.

In a case in which, for example, a load above a threshold load acts on the spool from the webbing while the spool and the rotor are connected via the lock bar, the load above the threshold load acts on the rotor via the lock bar. When the load above the threshold load acts on the rotor, the spring pawl disconnects the transmission of the rotation between the gear wheel and the rotor by the load and makes the gear wheel and the rotor run idle ("load limiter mechanism"). With this structure, the spool connected to the rotor via the lock bar is prevented from being rotated with excessively large force by the driving force of the motor.

Note that, in this webbing retractor, the gear wheel, the rotor and the spring pawl, which are the components of the rotating body, are not supported by the spool but the rotor is supported by the case, and the lock bar is supported by the rotor and the gear wheel is connected to the rotor via the spring pawl. Thus, in this webbing retractor, any component of the clutch is supported by the case. Unless the rotor and the spool are connected by the lock bar, the spool can rotate independently of the clutch (the gear wheel, the rotor, the spring pawl and the lock bar). Such a structure realizes reliably smooth rotation of the spool and improved operation of pulling-out and taking-up of the webbing for ordinary use.

As described above, the webbing retractor relating to the present invention allows one-way transmission of rotation from the motor to the spool by using a clutch, and improves operation of pulling-out and taking-up of the webbing for ordinary use.

### Brief Description of the Drawings

Fig. 1 is an exploded perspective view of a structure of a principle portion of a clutch which is a component of a webbing retractor according to an embodiment of the present invention;
Fig. 2 is an exploded perspective view of a structure of a principle portion of a clutch which is a component of a webbing retractor according to an embodiment of the present invention;
Fig. 3 is a cross-sectional view of a structure of a principle portion of a clutch which is a component of a webbing retractor according to an embodiment of the present invention;
Fig. 4 is a cross-sectional view of a partial structure of a clutch which is a component of a webbing retractor according to an embodiment of the present invention;
Fig. 5 is a side view of a structure of a clutch which is a component of the webbing retractor according to an embodiment of the present invention, illustrating that the lock bar is held at the slider;
Fig. 6 is a side view of a structure of a clutch which is a component of the webbing retractor according to an embodiment of the present invention, illustrating that the lock bar engages the ratchet;
Fig. 7 is a side view of a structure of a clutch which is a component of the webbing retractor according to an embodiment of the present invention, illustrating that the gear wheel and the rotor are connected via the spring pawl;
Fig. 8 is a side view of a structure of a clutch which is a component of the webbing retractor according to an embodiment of the present invention, illustrating that the gear wheel and the rotor are running idle with respect to each other;
Fig. 9 is a side view of a structure of a clutch which is a component of the webbing retractor according to an embodiment of the present invention, illustrating that the lock bar engages the ratchet;
Fig. 10 is a side view of a structure of a clutch which is a component of the webbing retractor according to an embodiment of the present invention, illustrating that the lock bar allows relative rotation of the ratchet and the rotor in the direction in which the webbing is taken up;
Fig. 11 is a side view of a structure of a clutch which is a component of the webbing retractor according to an embodiment of the present invention, illustrating that the lock bar engages the ratchet;
Fig. 12 is a side view of a structure of a clutch which is a component of the webbing retractor according to an embodiment of the present invention, illustrating that the lock bar is held at the slider;
Fig. 13 is an exploded perspective view illustrating configuration of peripheral members including a motor which is a component of the webbing retractor according to an embodiment of the present invention;
Fig. 14 is an exploded perspective view illustrating an overall structure of the webbing retractor according to an embodiment of the present invention;
Fig. 15 is a perspective view showing a structure of a principle portion of the webbing retractor according to an embodiment of the present invention; and
Fig. 16 is a perspective view showing an overall structure of the webbing retractor according to an embodiment of the present invention.

### Best Modes for Implementing the Invention

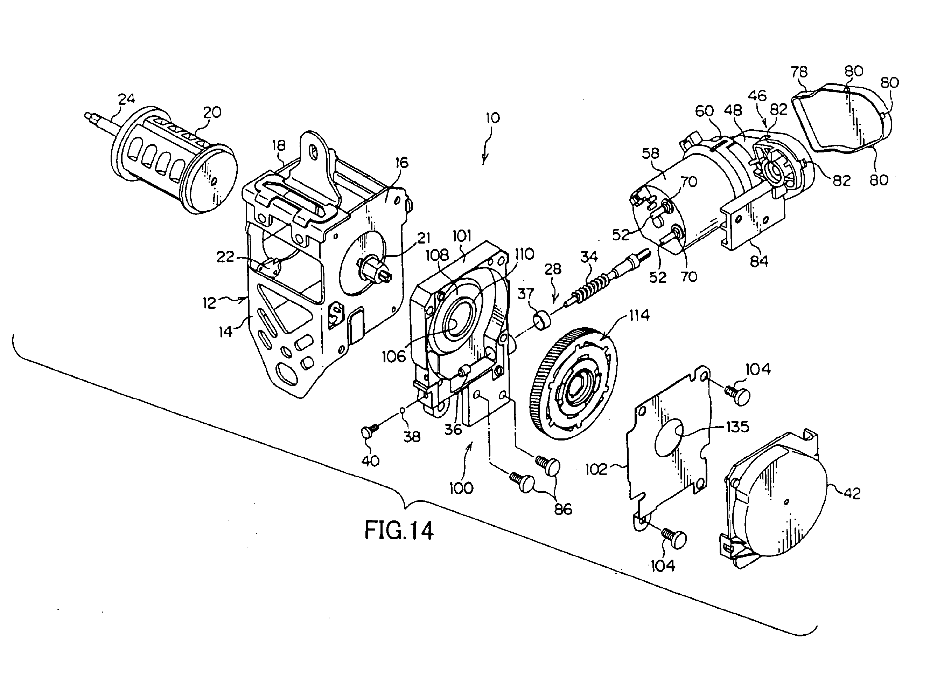

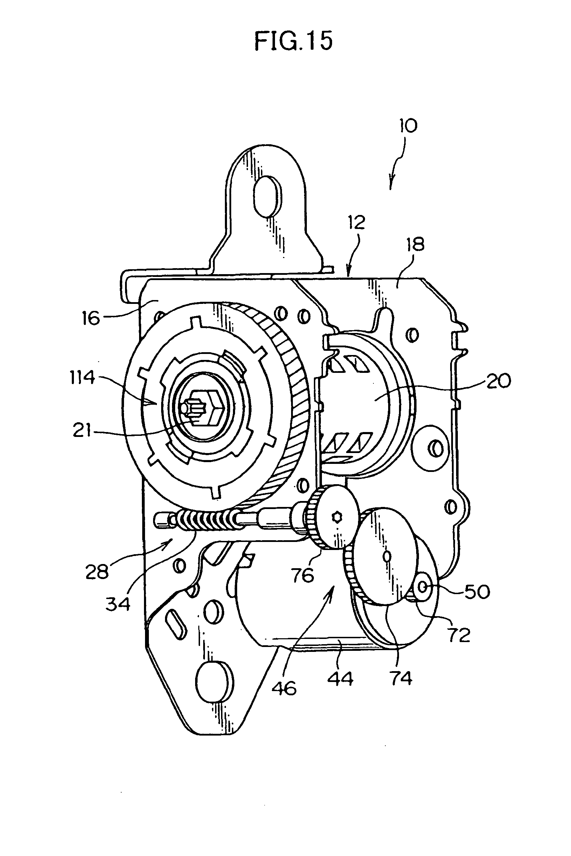

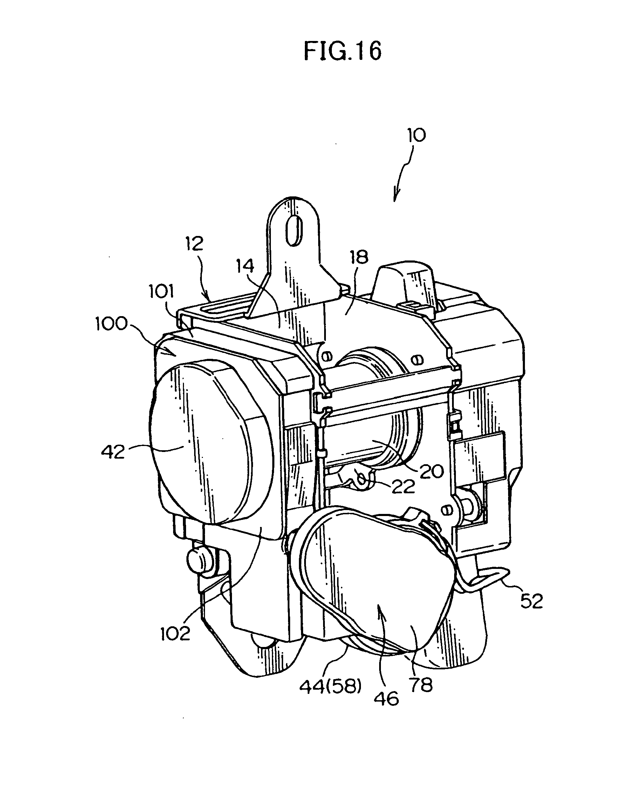

Fig. 16 illustrates an overall structure of a webbing retractor 10 relating to an embodiment of the present invention in a perspective view. Fig. 15 illustrates the structure of the principle portion of the webbing retractor 10 in a perspective view. Fig. 14 illustrates the overall structure of the webbing retractor 10 in an exploded perspective view.

The webbing retractor 10 includes a frame 12. The frame 12 comprises a substantially plate-shaped back plate 14 and a pair of leg plates 16 and 18 extending integrally from width direction both ends of the back plate 14. The frame 12 is mounted to a vehicle body with the back plate 14 being fixed to the vehicle body with an unillustrated tightening means such as a bolt.

A spool 20, formed through die casting and the like, is disposed between the pair of leg plates 16 and 18 of the frame 12. The spool 20 is generally formed in an hourglass-like shape. A base end of an elongated strip-shaped webbing (not shown) is connected and fixed at the spool 20. When the spool 20 is rotated in one of the axial directions (hereinafter, the direction is referred to as "taking-up direction"), the webbing is taken up from the base end thereof on an outer circumference of the spool 20. When the webbing is drawn at its distal end, the webbing is pulled out with the spool rotating (hereinafter, the direction of the rotation of the spool when the webbing is pulled out is referred to as "pulling-out direction").

One end of the spool 20 protrudes from the frame 12 through the leg plate 18. An unillustrated locking mechanism is provided at a side of the leg plate 18. The locking mechanism includes an acceleration sensor and is associated to a lock plate 22 extending between the leg plates 16 and 18, and a torsion bar 24 provided at a shaft center of the spool 20. In a case of rapid reduction of the vehicle and the like, operation of the locking mechanism causes one end of the torsion bar 24 to be held via the lock plate 22 and energy is absorbed from the torsion bar 24, while the rotation of the spool 20 in the pulling-out direction is inhibited.

The other end of the spool 20 protrudes slightly from the frame 12 through the leg plate 16. A hexagonal column-shaped connecting screw 21 is connected coaxially and integrally with the other end of the spool 20.

A clutch case 101 is disposed outside of the leg plate 16, serving as a case of the clutch 100 according to the present embodiment. The clutch case 101, formed in a box shape, is made of, for example, a metal material (e.g., aluminum alloy). The clutch case 101 opens at the opposite side of the leg piece 16. A clutch cover 102, formed from a steel plate and the like, is provided as a case at the open end of the clutch case 101. The clutch case 101 and the clutch cover 102 are fixed integrally to the leg piece 16 by screws 104.

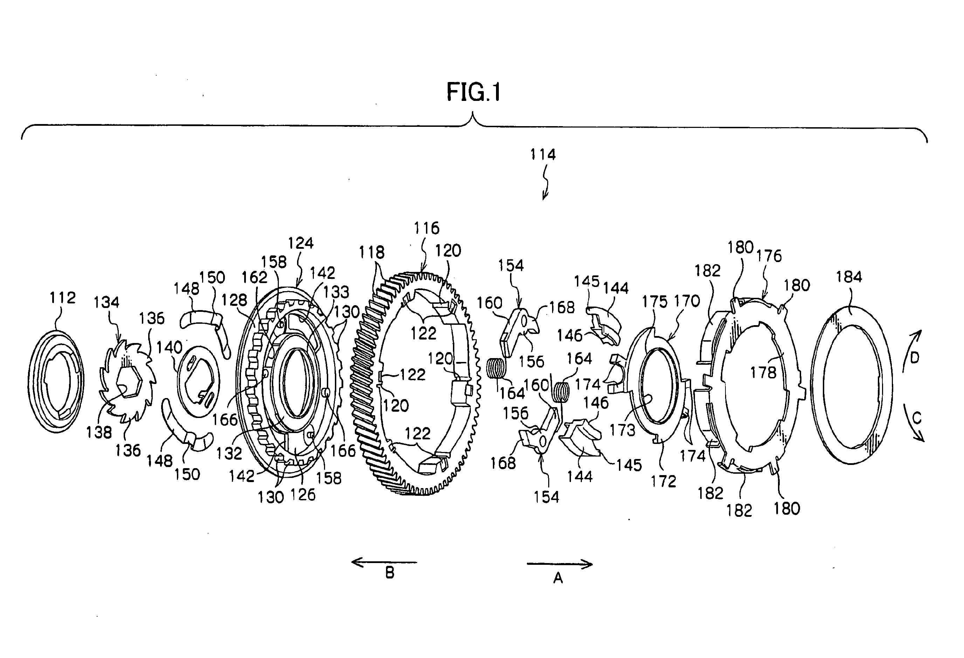

A round through hole 106 is formed coaxially with the spool 20 at a center of a bottom wall of the clutch case 101. The connecting screw 21 penetrates the through hole 106. A peripheral edge of the through hole 106 is made to protrude slightly in a disc shape toward an opposite side of the leg piece 16 to form a ring-shaped sliding surface 108. In addition, a cylindrical busing supporting portion 110 is formed along the peripheral edge of the through hole 106 protruding toward the opposite side of the leg piece 16. A ring-shaped busing 112 (see Fig. 1 to Fig. 3), made of, for example, resin material, is supported by the busing supporting portion 110.

A clutch gear section 28 is disposed inside the clutch case 101. The clutch gear section 28 includes a warm gear 34. The axis of the warm gear 34 is provided orthogonal to the spool 20. One end of the warm gear 34, supported by the clutch case 101 via bushes 36 and 37, protrudes outward from the clutch case 101. A steel ball 38 is received in a bearing of the clutch case 101 which supports a distal end of the warm gear 34. The steel ball 38 is in contact with the distal end of the warm gear 34. An adjusting screw 40 is screwed into the bearing. A distal end of the adjusting screw 40 presses the steel ball 38 against the distal end of the warm gear 34. In this manner, displacement of the warm gear 34 in an axial direction thereof is restricted ("thrust-adjusted"). Note that the steel ball 38 may be formed integrally with the distal end of the adjusting screw 40 (i.e., the distal end of the adjusting screw 40 may be formed in a round shape).

A clutch main body 114, which forms the clutch 100 of the present embodiment, is provided above the warm gear 34.

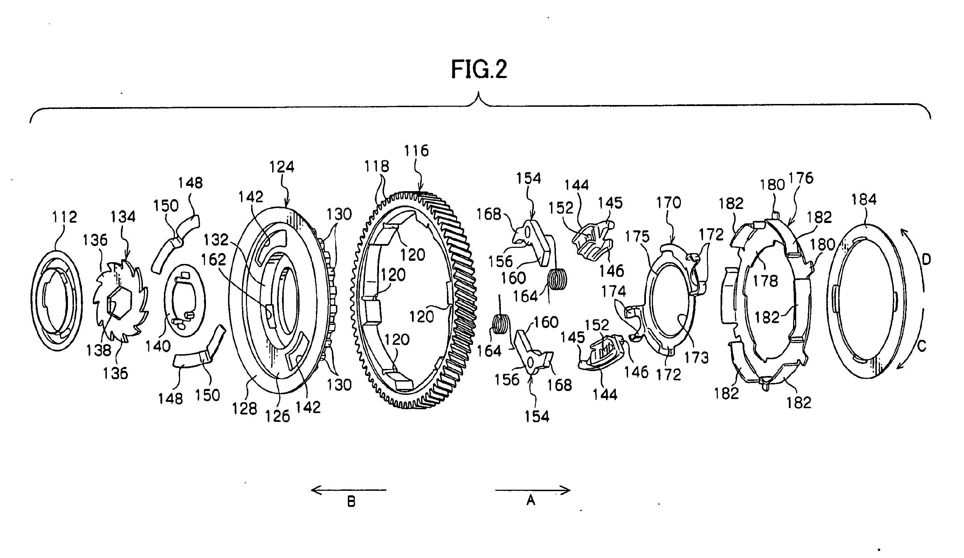

Here, a structure of the clutch main body 114 is shown in Figs. 1 and 2 in exploded perspective views.

As shown in Figs. 1 and 2, the clutch main body 114 includes a gear wheel 116. The gear wheel 116 is formed as a ring made of, for example, resin material and disposed coaxially with the spool 20. An outer circumference of the gear wheel 116 is provided with so-called warm wheel teeth 118. The warm wheel teeth 118 mesh with the warm gear 34 described above. Plural (six in the present embodiment) circumferential-direction load-receiving portions 120 are disposed at predetermined intervals along an inner circumference of the gear wheel 116. These circumferential direction load receiving portions 120 correspond to spring pawls 182 of the ring 176 described later. In addition, plural (six in the present embodiment) locking recessed portions 122 are provided at predetermined intervals at the axial direction one end surface (a side of arrow A in Figs. 1 and 2) of the gear wheel 116 along the inner circumference of the gear wheel 116. These locking recessed portions 122 correspond to locking pawls 180 of the ring 176 described later.

A disc-shaped rotor 124, made of metallic material and the like (e.g., zinc-aluminum alloy), is provided coaxially with the gear wheel 116. The rotor 124 includes a bottomed cylinder-shaped main body 126 and a flange portion 128 projecting radially at one axial direction side (a side of arrow B in Figs. 1 and 2) of the main body 126.

Plural external teeth 130 are formed at even intervals on an outer circumference of the main body 126 along the radial direction. Each of the external teeth 130 is formed such that a side wall at one side (a side of arrow C in Figs. 1 and 2) along the circumferential direction of the main body 126 is inclined with respect to the circumferential direction of the main body 126, and that the other side (a side of arrow D in Figs. 1 and 2) along the circumferential direction of the main body 126 is parallel to the radial direction of the main body 126 (i.e., the external tooth has a trapezoid cross-section). Each of the external teeth 130 corresponds to a spring pawl 182 of the ring 176 described later.

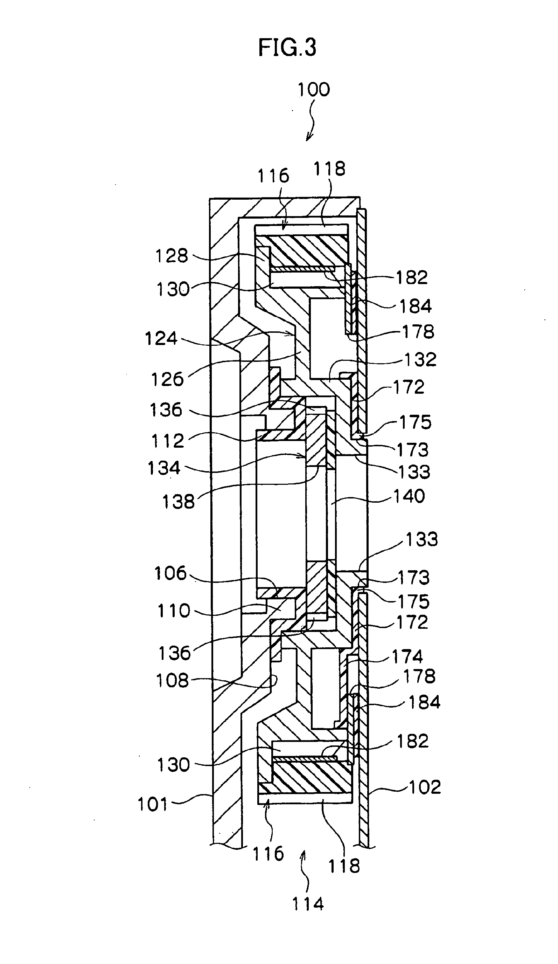

A substantially cylindrical accommodating portion 132 is provided coaxially with the main body 126 at the center of the bottom wall of the main body 126. A ring-shaped spindle 133 is provided coaxially with the accommodating portion 132 so as to protrude from the axial direction one side (a side of arrow A in Figs. 1 and 2) of the accommodating portion 132. As shown in Fig. 3, the spindle 133 is rotatably supported by a round hole 135 formed on the clutch cover 102 via a rotation support portion 175 of a later-described holder 170. Further, the busing 112 is rotatably fitted into the accommodating portion 132 at the axial direction the other side of the accommodating portion 132 (a side of arrow B in Figs. 1 and 2). The accommodating portion 132 is rotatably supported, at the axial direction the other side thereof, by the clutch case 101 via the busing 112. In this manner, the main body126 (rotor126) can rotate around the axis thereof

A generally ring-shaped ratchet 134, made of a steel sheet and the like, is received in the accommodating portion 132 of the main body 126. External teeth 136, which are so-called ratchet teeth, are formed at an outer circumference of the ratchet 134. A hexagonal through hole 138 is formed at a shaft center portion of the ratchet 134. The connecting screw 21 is inserted in the through hole 138 and is connected integrally therewith in the axis direction. In this manner, the ratchet 134 and the spool 20 are rotated integrally with each other via the connecting screw 21.

The ratchet 134 slidably abuts against the busing 112 in the axial direction one side thereof (a side of arrow B in Figs. 1 and 2). A washer 140 made of, for example, resin material is attached at the axial direction the other end (a side of arrow A in Figs. 1 and 2) of the ratchet 134. The washer 140 slidably abuts against the ring-shaped bottom wall of the accommodating portion 132, thereby restricting replacement of the ratchet 134 along the axis direction.

A pair of guide holes 142, curved along the circumferential direction of the main body 126, is provided in the bottom wall of the main body126 at a radial direction outer side of the accommodating portion 132. A slider 144 made of, for example, resin material is slidably attached to each guide hole 142. The slider 144 is formed in a substantial block shape, curved along the circumferential direction of the main body 126. The pair of sliders 144 is held at an inner circumferential surface of the main body 126 and an outer circumferential surface of the accommodating portion 132. The sliders 144 can move relatively with the main body126 (rotor 124) within a predetermined range along the guide hole 142.

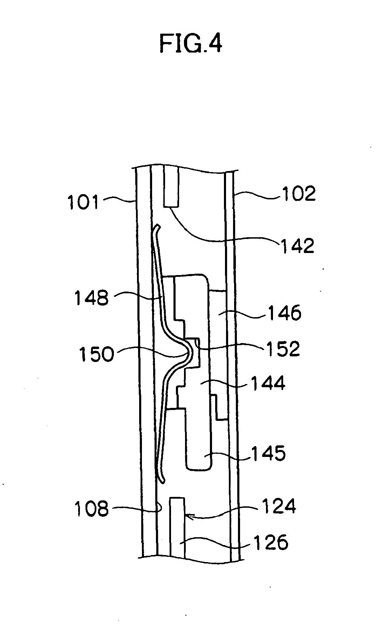

A sliding piece 146 is provided to protrude at one side (a side of arrow A in Figs. 1 and 2) of each slider 144. The sliding piece 146 abuts against the clutch cover 102 as shown in Fig. 4. Each slider 144 includes a retainer 148 at the opposite side of the sliding piece 146. The retainer 148 is an elastic, narrow-width metallic piece and is bent in a substantial V shape. The retainer 148 is coupled integrally with the slider 144 with a connecting portion 150 provided at a longitudinal direction central portion of the retainer 148 being fitted into a connecting hole 152 formed at the slider 144. Longitudinal direction both ends of he retainer 148 are pressed against the sliding surface 108 of the clutch case 101 and deform elastically by a predetermined amount.

With this structure, the sliding piece 146 of the slider 144 is pressed against the clutch cover 102 by the elastic force of the retainer 148 so that predetermined frictional force acts on the slider 144 while the slider 144 moves along the guide hole 142 (moves relatively to the rotor 124). Therefore, when the rotor 124 is rotated, the slider 144 is temporarily held on the case (the clutch case 101 and the clutch cover 102) by the frictional force applied to longitudinal direction both end portions of the sliding piece 146 and of the retainer 148, and is moved relatively to the rotor within a predetermined range along the guide hole 142.

A pressure holding piece 145 is provided at each curving direction end portion of the sliders 144 (the end portion in arrow C in Figs. 1 and 2). These press holding pieces 145 correspond to the pair of lock bars 154.

Each of the lock bars 154 is formed in a substantial V-shape formed from, for example, steel plate and is disposed at a curving direction one end portion of each slider 144. Each lock bar 154 includes a ring-shaped bearing 156. Each bearing 156 is rotatably supported by a cylindrical spindle 158 provided to protrude from the bottom wall of the main body 126. A connecting piece 160 is provided to protrude from the bearing 156 at a side opposite to the slider 144 (a side of arrow C in Figs. 1 and 2). When the connecting piece 160 pivots about the spindle 158 together with the bearing 156, the distal end of the connecting piece 160 enters a hole 162 provided at the accommodating portion 132 of the rotor 124 to mesh with the external teeth 136 of the ratchet 134. The connecting piece 160 is always urged toward a meshing direction with the external teeth 136 (ratchet 134) by the urging force from a twisted coil spring164. The twisted coil spring 164 is supported by a cylindrical spindle 166 provided to protrude from the bottom wall of the main body 126 of the rotor 124.

A releasing piece 168 corresponding to the pressure holding piece 145 is provided to protrude from the bearing 156 at the slider 144 side (a side of arrow D in Figs. 1 and 2). An end portion of the releasing piece 168 opposite to the slider 144 is made as a surface inclined with respect to a moving direction of the slider 144 (sides of arrows C and D in Figs. 1 and 2).

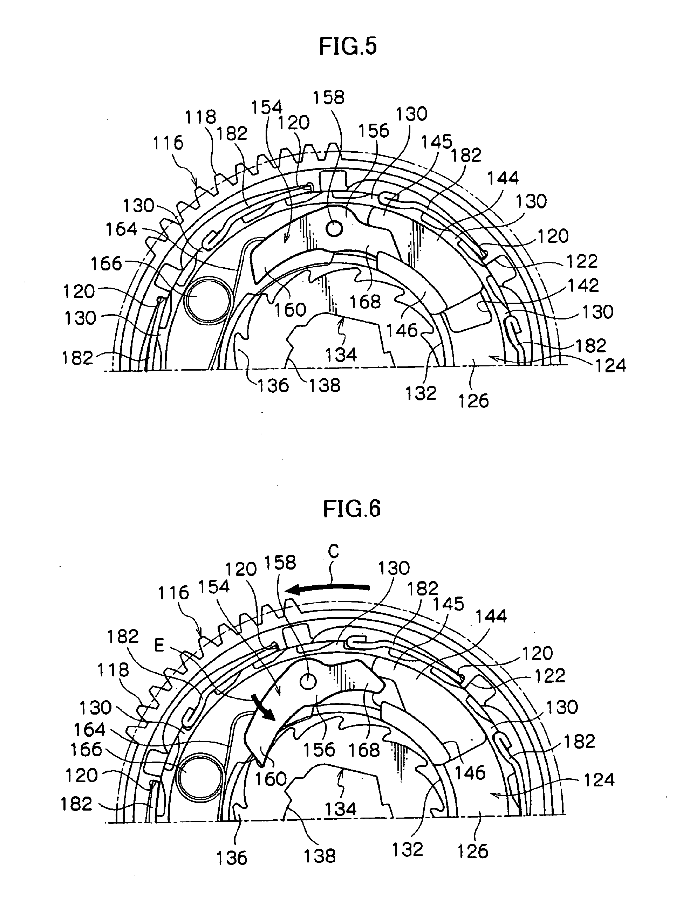

Here, as shown in Figs. 5 and 6, the relative movement of the rotor 124 and the slider 144 causes the lock bar 154 to move apart from the slider 144 within a predetermined range. In a state in which the lock bar 154 approaches the slider 144 (the state shown in Fig. 5), the releasing piece 168 of the lock bar 154 enters the inner side of the pressure holding piece 145 of the slider 144 and thus is kept at a disengaged position against the urging force of the twisted coil spring 164. In this state, the connecting piece 160 of the lock bar 154 is moved apart from the ratchet 134.

In a state in which the lock bar 154 is spaced apart from the slider 144 (the state shown in Fig. 6), the releasing piece 168 of the lock bar 154 is released from being held by the pressure holding piece 145 of the slider 144. In this state, the connecting piece 160 of the lock bar 154 is moved toward the ratchet 134 (an engaging position) by the urging force of the twisted coil spring 164 and a distal end of the connecting piece 160 meshes with the external teeth 136.

The clutch main body 114 according to the present embodiment is normally disposed near the lock bar 154. Thus, the lock bar 154 is normally kept at a disengaged position (the state shown in Fig. 5) by the releasing piece 168 being held by the pressure holding piece 145 of the slider 144.

A ring-shaped holder 170 made of, for example, resin material is provided at opposite side (a side of arrow A in Figs. 1 and 2) of the rotor 124 via the lock bar 154. The holder 170 includes a ring-shaped main body 172, and a pair of holding pawls 174 disposed at an outer circumference of the main body 172. The main body 172 restricts displacement of the lock bar 154 with respect to the spindle 158 (rotor 124) in the axis direction. The pair of holding pawls 174 restricts displacement of the twisted coil spring 164 with respect to the spindle 166 (rotor 124) in the axis direction.

A spindle 133 of the rotor 124 is inserted through a round hole 173 formed at a central portion of the main body 172. A rotation support portion 175 is provided at an edge portion of the round hole 173 slightly protruding toward the opposite side of the rotor 124 (i.e., the clutch cover 102 side) in a cylindrical manner. The spindle 133 of the rotor 124 is rotatably supported by the round hole 135 of the clutch cover 102 via the rotation support portion 175.

A ring 176 made of metallic material (e.g., SUS) having spring property is disposed at a radial direction outer side of the holder 170 and at an axial direction one side (a side of arrow A in Figs. 1 and 2) of the rotor 124. The ring176 has a ring-shaped cover portion 178. Plural (six in the present embodiment) locking pawls 180 are integrally provided to protrude in the radial direction outer side of the outer circumference of the cover portion 178. Each of these locking pawls 180 is received in the locking recessed portion 122 of the gear wheel 116. Thus, the ring 176 is integrally connected to the gear wheel 116 in the circumferential direction thereof.

In addition, plural (six in the present embodiment) spring pawls 182 are integrally provided at even intervals along the circumferential direction of the cover portion 178. The spring pawls 182 are formed as a narrow plate. A base end portion of the spring pawl 182 is integrally connected to the cover portion 178. A longitudinal direction middle portion of the spring pawl 182 is slightly bent toward the radial direction inner side of the cover portion 178, and distal ends of the spring pawl 182 are bent toward the radial direction outer side of the cover portion 178. Thus, the spring pawls 182 are generally bent along the circumferential direction of the cover portion 178.

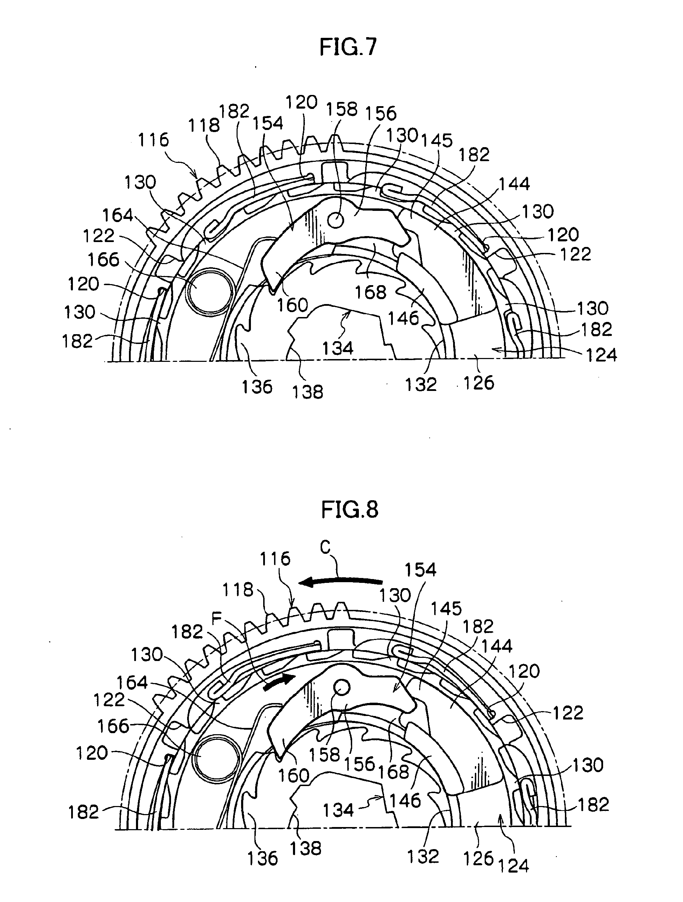

As shown in Fig. 7, these spring pawls 182 are disposed along the circumferential direction of the rotor 124 and the gear wheel 116 between the external tooth 130 of the rotor 124 and the inner circumferential surface of the gear wheel 116. An inner side portion of the spring pawl 182 is pressed against the external tooth 130 of the rotor 124 by the elastic force thereof Thus, the ring 176 is integrally held by the rotor 124.

An outside portion of the spring pawl 182 engages the inner circumferential surface of the gear wheel 116. The gear wheel 116 is supported by the rotor 124 via the spring pawls 182. In this state, movement of the gear wheel 116 in the axis direction is restricted by a locking pawl 180 of the ring 176 and the flange portion 128 of the rotor 124. In addition, in this state, the cover portion 178 of the ring 176 prevents the slider 144, the lock bar 154, the twisted coil spring 164 and the holder 170 from being removed from the rotor 124. These components are held at predetermined assembled positions.

Further, each distal end of the spring pawl 182 enters the bottom of the external tooth 130 and abuts one of the side walls of the external tooth 130 (the side wall formed parallel along the radial direction of the main body 126). Each base end portion of the spring pawl 182 abuts the circumferential-direction load-receiving portion 120 of the gear wheel 116. In this manner, the gear wheel 116 and the rotor 124 are integrally connected to each of the spring pawls 182 in the circumferential direction thereof (relative rotation thereof is restricted), and when the gear wheel 116 is rotated, the gear wheel 116 and the rotor 124 are basically rotated integrally with each other.

In this case, the rotational force of the gear wheel 116 in the taking-up direction is transmitted to the base end portion of the spring pawl 182 via the circumferential-direction load-receiving portion 120, and is transmitted to the external tooth 130 of the rotor 124 from the distal end of the spring pawl 182. The gear wheel 116 receives the load applied by the spring pawl 182 via the circumferential-direction load-receiving portion 120 along the circumferential direction (the load receiving direction of the gear wheel 116 from the spring pawl 182 is along the rotating direction thereof).

In this case, as described above, because the spring pawl 182 is a metal piece having spring property, when the rotational force generated by the relative rotation of the gear wheel 116 and the rotor 124 is large enough to make the distal end of the spring pawl 182 moves out of the bottom of the external tooth 130 against the spring force (urging force) of the spring pawl 182, the connection between the gear wheel 116 and the rotor 124 by the spring pawl 182 around the axis is released, and thus the relative rotation between the gear wheel 116 and the rotor 124 is permitted (see Fig. 8).

The rotational force of the gear wheel 116 in the pulling-out direction is transmitted to the locking pawl 180 of the ring 176 via the locking recessed portion 122, and is transmitted to the external tooth 130 of the rotor 124 from the distal end of the spring pawl 182 of the ring 176.

A ring-shaped spacer 184 made of, for example, resin material is provided at the ring 176 at the opposite side of the rotor 124 (a side of arrow A in Figs. 1 and 2). The spacer 184 is disposed between the ring 176 and the clutch cover 102, and is not allowed to rotate relatively to the ring 176 about the axis thereof. The spacer 184 prevents the metal ring 176 from sliding directly on the clutch cover 102 and makes relative rotation of the ring 176 (clutch main body 114) and the clutch cover 102 smooth.

In the clutch 100 having the above-described structure, the rotation of the warm gear 34 of the clutch gear section 28 makes the gear wheel 116 of the clutch main body 114 to rotate. The clutch main body 114 and the clutch gear section 28 are integrally assembled to a single case (the clutch case 101 and the clutch cover 102) and are in general made as a unit.

As shown in Fig. 14, a spring complete 42 is provided at a side of the clutch cover 102. The spring complete 42 receives a spiral spring (not shown) inside. An outer end of the spiral of the spiral spring is anchored to the case body. An inner end of the spiral of the spiral spring is anchored to a distal end of the connecting screw 21 disposed through the clutch main body 114. The spiral spring urges the spool 20 in the taking-up direction.

A motor 44 and the motor gear portion 46 are disposed between the leg plates 16 and 18 below the spool 20.

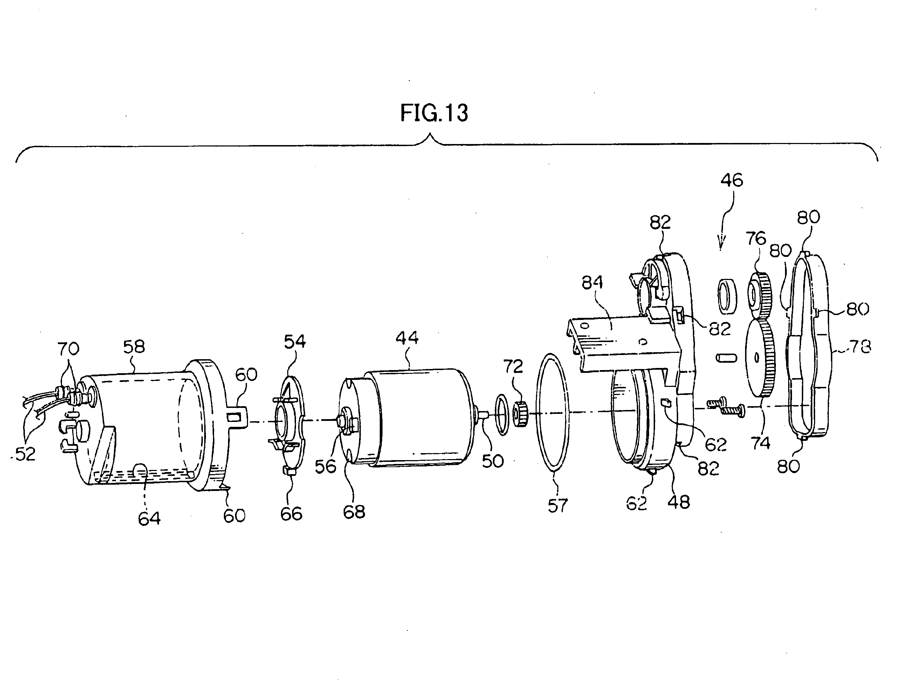

Here, in Fig. 13, the structures of the motor 44 and the motor gear portion 46 are shown in an exploded perspective view.

The motor 44 and the motor gear portion 46 include a housing 48. The motor 44 is attached at one side of the housing 48 and the motor gear portion 46 is attached at the other side of the housing 48. The motor 44 is fixed to one side of the housing 48 with a distal end (output side) of the rotational axis 50 facing the housing 48. The distal end of the rotational axis 50 protrudes from the other side of the housing 48 (the side of the motor gear portion 46 side). A base plate 54 to which an electric harness 52 for driving the motor is provided at a rear end of the motor 44. The electric harness 52 is connected to the base plate 54. The connecting portion of the electric harness 52 is connected to a feeding terminal 56 disposed at a body of the motor 44 through crimping contact. Also, the connecting portion of the electric harness 52 and the feeding terminal 56 may be soldered.

The motor 44 is covered by a cover motor 58. The cover motor 58 includes a pawl portion 60. The cover motor 58 is fixed to the housing 48 with the pawl portion 60 anchored to a pawl-receiving protrusion 62 provided at the housing 48.

The cover motor 58 includes a first recessed portion 64. The base plate 54 includes a convex portion 66 which can be received in the first recessed portion 64. The motor 44 includes a second recessed portion 68 which may receive the convex portion 66 so as to correspond to the convex portion 66 of the base plate 54.

In particular, the motor 44 is aligned with the base plate 54 with the convex portion 66 received in the second recessed portion 68, and the base plate 54 is aligned with the cover motor 58 with the convex portion 66 received in the first recessed portion 64. In addition, the cover motor 58 is fixed to the housing 48 with the pawl portion 60 received in the pawl-receiving protrusion 62, and thus the assembled position of the motor 44 about the axis with respect to the housing 48 is unambiguously defined.

The electric harness 52 for driving the motor is taken out from the rear end of the cover motor 58 toward a back plate 14 of the frame 12 at the side of the motor opposite to the output side. The portion of the cover motor 58 at which the electric harness 52 is taken out is waterproofed by a rubber cap 70.

A pinion 72, which structures plural spur gears of the motor gear portion 46, is provided at a distal end of the rotational axis 50 of the motor 44 protruding at the other side of the housing 48 (the side of the motor gear portion 46). Further, the gears 74 and 76, which are externally toothed spur gears and form a driving force transmitting means, are received in the motor gear portion 46 in a state in which they mesh with each other. These gears 74 and 76 are disposed such that the axes thereof are disposed parallel to the rotational axis 50 of the motor 44. The gear 74 meshes with the pinion 72. The gear 76, which is a final spur gear, is detachably connected to one end portion of the warm gear 34 protruding from the clutch case 101 of the clutch gear section 28. In this manner, when the motor 44 is driven, the driving force is transmitted via the pinion 72 and the gears 74 and 76 to rotate the warm gear 34.

Further, the pinion 72, the gear 74 and the gear 76 are covered by the cover gear 78 attached to the housing 48. The cover gear 78 has a pawl portion 80. The cover gear 78 is fixed to the housing 48 while the pawl portion 80 is received and engaged with a pawl receiving portion 82 provided at the housing 48.

As described above, both the motor 44 and the motor gear portion 46 are integrally assembled to a single housing 48 and is generally structured as a unit.

In the thus structured motor 44 and the motor gear portion 46, a mounting stay 84 provided integrally with the housing 48 is detachably mounted on the clutch case 101 (namely, frame 12) by a screw 86. The clutch case 101 accommodates a clutch main body 114 and a clutch gear section 28. When the housing 48 is mounted on the clutch case 101 (frame 12), the rotational axis 50 of the motor 44 is in a right angle with the spool 20 and the output side of the motor 44 is in an opposite direction of the back plate 14 of the frame 12. The motor 44 is disposed just below the spool 20 and between the pair of leg plates 16 and 18.

Here, in the thus-structured motor 44 and the motor gear portion46, the gear 76 serving as a final spur gear of the motor gear portion 46 is detachably connected to the clutch 26 and the warm gear of the clutch gear section 28. Because the mounting stay 84 is detachably mounted to the clutch case 101 by the screw 86, the motor 44 and the motor gear portion 46 can be removed independent of the clutch case 101 (the frame 12) in an assembled state by disassembling the mounting stay 84 from the clutch case 101 by removing the screw 86.

In addition, the motor 44 is operated by signals detected by, for example, a forward monitoring device.

Next, operation of the present embodiment will be described.

In the webbing retractor 10 having the above-described structure, the slider 144 of the clutch main body 114 is normally disposed near the lock bar 154 as shown in Fig. 5. Thus, the releasing piece 168 of the lock bar 154 is normally held by the pressure holding piece 145 of the slider 144 and the connecting piece 160 of the lock bar 154 is spaced apart from the external tooth 136 of the ratchet 134. Thus, the ratchet 134 (spool 20) is freely rotate relative to the rotor 124.

When a vehicle occupant seated at a vehicle seat pulls out the webbing accommodated in the webbing retractor 10, the spool 20 is rotated and the webbing is pulled out. Then the vehicle occupant puts on the webbing and, for example, engages a tongue plate attached to the webbing to a buckle device to wear the webbing.

If there is an obstacle ahead of the running vehicle, for example, and the space between the vehicle and the obstacle (i.e., the distance between the vehicle and the obstacle) becomes within a threshold range, the motor 44 begins to rotate and the rotational axis 50 is rotated rapidly.

When the rotational axis 50 of the motor 44 is rotated, the rotational force is transmitted to the gear wheel 116 of the clutch main body 114 via the pinion 72, the gears 74 and 76, and the warm gear 34 of the clutch gear section 28, and the gear wheel 116 is rotated rapidly in the taking-up direction. The rotation of the gear wheel 116 in the taking-up direction is transmitted to the base end portion of the spring pawl 182 of the ring 176 via the circumferential-direction load-receiving portion 120, and is transmitted from the distal end portion of the spring pawl 182 to the external tooth 130 of the rotor 124, and the rotor 124 is rotated rapidly in the taking-up direction.

At this time, because the slider 144 is held on the case (the clutch case 101 and the clutch cover 102) by the frictional force applied to the sliding piece 146 and the retainer 148, the rotor 124 moves relative to the slider 144 within a predetermined range and the lock bar 154 supported by the rotor 124 is moved apart from the slider 144.

Thus, the pressure holding piece 145 which holds the releasing piece 168 is released and the connecting piece 160 of the lock bar 154 is moved toward the ratchet 134 side by the urging force of the twisted coil spring 164. A distal end of the connecting piece 160 meshes with the external tooth 136 of the ratchet 134 (see arrow E of Fig. 6). In this manner, the rotation of the rotor 124 in the taking-up direction is transmitted to the ratchet 134 via the lock bar 154, and the ratchet 134 is rotated rapidly in the taking-up direction. Because the ratchet 134 is integrally connected to the spool 20, the spool 20 is rotated rapidly in the taking-up direction together with the ratchet 134.

In this manner, the webbing is retracted on the spool 20 while slight looseness which is referred to as "slack" of the webbing is eliminated, and restraining ability of the webbing is improved. Even if the vehicle occupant brakes the car suddenly and the vehicle makes rapid reduction, the body of the vehicle occupant is further securely restrained.

Under a condition in which the slack is eliminated, the body of the vehicle occupant prevents further taking-up of the webbing on the spool 20. Thus, load not smaller than the threshold load acts on the spool 20 from the webbing, and thus load not smaller than the threshold load acts on the rotor 124 via the ratchet 134 and the lock bar 154. When load not smaller than the threshold load acts on the rotor 124, as shown in Fig. 7 and Fig. 8, the spring pawl 182 makes elastic deformation and each distal end of the spring pawl 182 moves out of the bottom of the external tooth 130 of the rotor 124, thereby allowing the gear wheel 116 and the rotor 124 to relatively run idly (so-called "load limiter mechanism", see arrow F of Fig. 8).

In this manner, rotation of the spool 20, which is connected to the rotor 124 via the ratchet 134 and the lock bar 154, in the taking-up direction with excessively large force by the driving force of the motor 44 is prevented. Thus, it can be prevented that the webbing restrains the body of the vehicle occupant with excessively large force.

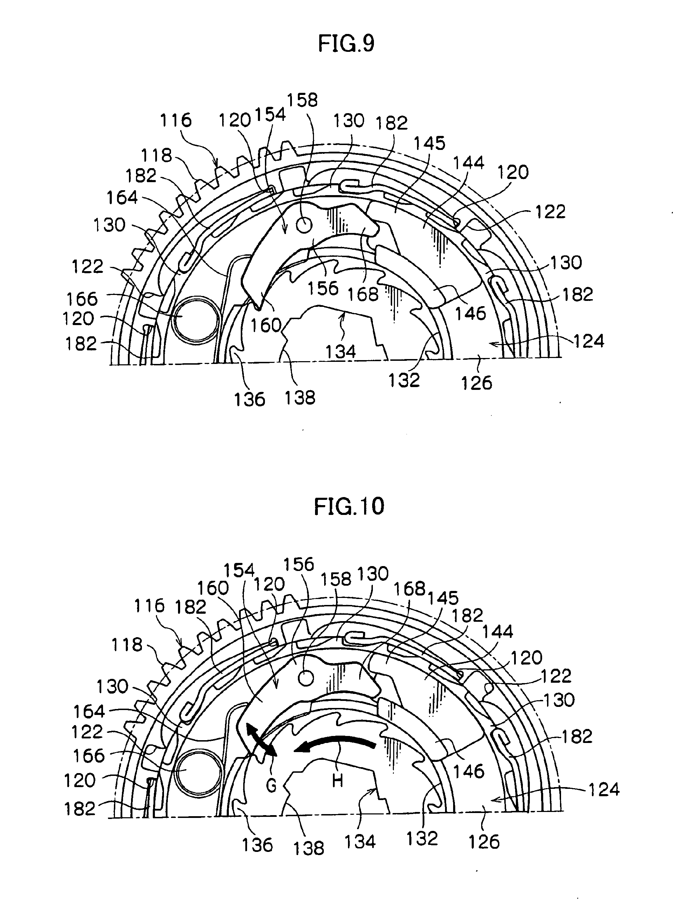

Further, in this state, because the external teeth 136 of the ratchet 134 are so-called ratchet teeth, as shown in Fig. 9 and Fig. 10, when the ratchet 134 (spool 20) is to rotate relatively to the rotor 124 in the taking-up direction (see arrow H in Fig. 10), the lock bar 154 allows relative rotation of the ratchet 134 (spool 20) with the rotor 124 in the taking-up direction by being flipped up by the external teeth 136 of the ratchet 134 (see arrow G in Fig. 10). In this manner, under a condition in which the slack is eliminated, when a vehicle crash becomes inevitable, the spool 20 may also be forcibly rotated in the direction in which the webbing is taken up using another pretensioner device and the like. In this case, the ability of the webbing for restraining the body of the vehicle occupant can further be improved, and damage that would have been caused to a vehicle occupant at the time of vehicle crash can be minimized.

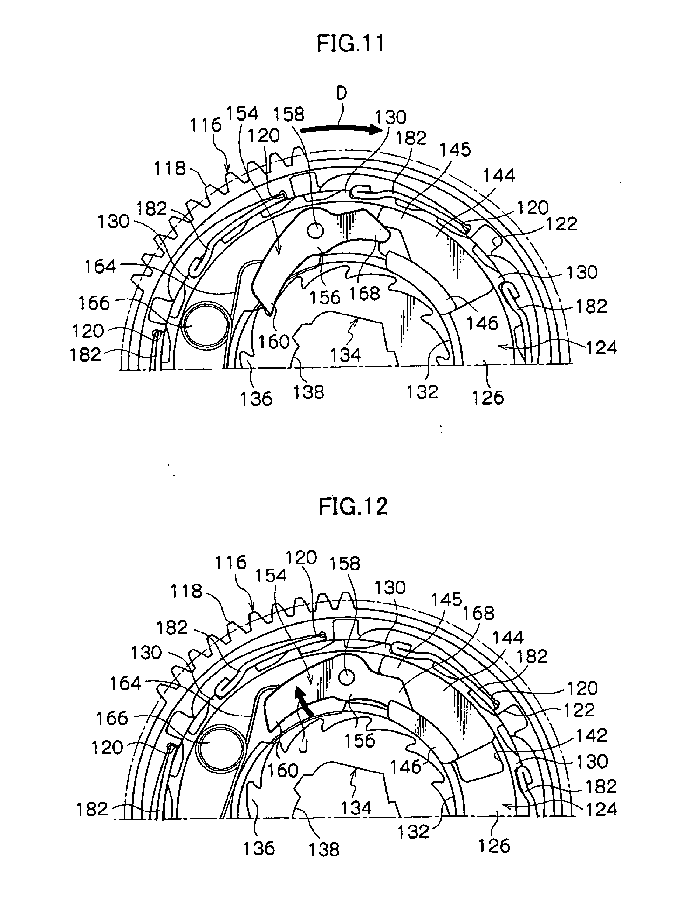

If the risk of vehicle crash as described above is avoided, the rotating shaft 50 of the motor 44 is driven to rotate in the reverse direction. The rotational force of the rotating shaft 50 is transmitted to the gear wheel 116 of the clutch main body 114 via the pinion 72, the gears 74 and 76, and the warm gear 34 of the clutch gear section 28 and the gear wheel 116 is rapidly rotated in the pulling-out direction (see arrow D in Fig. 11).

The rotation in the pulling-out direction of the gear wheel 116 is transmitted to the locking pawl 180 of the ring 176 via the locking recessed portion 122 of the gear wheel 116 and, at the same time, transmitted to the external teeth 130 of the rotor 124 from the distal end of the spring pawl 182 of the ring 176 so that the rotor 124 is rapidly rotated in the pulling-out direction.

Here, the slider 144 is held on the case (the clutch case 101 and the clutch cover 102) through the frictional force applied to the sliding piece 146 and the retainer 148. Thus the rotor 124 moves relative to the slider 144 in a predetermined distance, and the lock bar 154 provided at the rotor 124 moves toward the slider 144.

Thus, when the pressure holding piece 145 of the slider 144 presses an inclined end surface of the releasing piece 168 of the lock bar 154, the releasing piece 168 is moved toward the ratchet 134 side against the urging force of the twisted coil spring 164 (see arrow J in Fig. 12), and the connecting piece 160 of the lock bar 154 is moved apart from the external teeth 136 of the ratchet 134. Further, when the lock bar 154 moves toward the slider 144, the releasing piece 168 of the lock bar 154 enters the inside (ratchet 134 side) of the pressure holding piece 145 of the slider 144 and the lock bar 154 is held at a disengaged position (the condition illustrated in Fig. 12). Thus, the rotor 124 and the ratchet 134 are again allowed to relatively rotate, and the spool 20 can rotate freely.

Here, in the clutch 100 of the webbing retractor 10, the clutch main body 114 is not supported by the spool 20 but by the case (the clutch case 101 and the clutch cover 102). In particular, as shown in Fig. 3, the clutch main body 114 is rotatably supported by the case (the clutch case 101 and the clutch cover 102) with the spindle 133 provided at the accommodating portion 132 of the rotor 124 in one side of the axial directions being rotatably supported in the round hole 135 of the clutch cover 102 via the rotation support portion 175 of the holder 170, and with the accommodating portion 132 in the other side of the axial directions being rotatably supported by the clutch case 101 via the busing 112. Therefore, in the webbing retractor 10, unless the rotor 124 and the ratchet 134 (spool 20) are connected by the lock bar 154 (vehicle rapid reduction and the like), the spool 20 can rotate independently of the clutch main body 114. Such a structure realizes reliably smooth rotation of the spool 20 and improved operation of pulling-out and taking-up of the webbing for ordinary use.

Further, the clutch 100 of the webbing retractor 10 is a simply structured, as described above, in that the slider 144 and the lock bar 154 move relatively with each other by the slider 144 of the clutch main body 114 being held on the case (the clutch case 101 and the clutch cover 102) through the frictional force of the slider 144, and the relative movement moves the lock bar 154 to an engaged position or a disengaged position with the ratchet 134. Therefore, as compared with conventional clutches that use a large, heavy inertial disc to move the pawl, the overall structure of the clutch 100 can be made remarkably compact (in particular, thin) and thus overall structure of the webbing retractor 10 can be made compact.

Further, in the clutch 100 of the webbing retractor 10, a circumferential-direction load-receiving portion 120 is provided at the gear wheel 116 of the clutch main body 114. When the rotational force in the taking-up direction is transmitted from the gear wheel 116 to the rotor 124, the load applied to the gear wheel 116 from the spring pawl 182 acts on the gear wheel 116 along the circumferential direction thereof via the circumferential-direction load-receiving portion 120. Thus, it is not necessary to improve strength of the gear wheel 116 for the load that may act on the gear wheel 116 from the spring pawl 182 along the radial direction thereof at the time of transmission of the rotational force.

In addition, in the clutch 100, when load of predetermined value or above acts on the rotor 124, the spring pawl 182 makes elastic deformation and each distal end of the spring pawl 182 moves out of the bottom of the external tooth 130 of the rotor 124, thereby disconnecting the transmission of the rotation between the gear wheel 116 and the rotor 124. In other words, the "load limiter mechanism" described above operates between the rotor 124 and the spring pawl 182, and, in this case, load does not act on the gear wheel 116 along the radial direction thereof. Therefore, it is also not necessary to improve the strength of the gear wheel 116. In the clutch 100, the gear wheel 116 can be made thinner, and can be made of, for example, resin. As a result, the clutch 100 can be made compact and lightweight.

In addition, in the clutch 100 of the webbing retractor 10, the ring 176 of the clutch main body 114 integrally includes the cover portion 178 and the spring pawl 182 for the "load limiter mechanism". The cover portion 178 holds the gear wheel 116, the slider 144, the lock bar 154, the twisted coil spring 164 and the holder 170 at predetermined assembled positions. The ring 176 is held integrally at the rotor 124 by the elastic force of the spring pawl 182. In particular, in the clutch main body 114, each of the clutch components is temporarily held (sub-assembled) integrally with the gear wheel 116, the slider 144, the lock bar 154, the twisted coil spring 164 and the holder 170 being assembled at predetermined assembled positions, and the ring 176 being held integrally at the rotor 124 by the elastic force of the spring pawl 182. Such a structure realizes improved assembling property for assembling, for example, the clutch main body 114 to the case (the clutch case 101 and the clutch cover 102) and improved productivity of the webbing retractor 10.

As described above, in the webbing retractor 10 according to the present embodiment, the clutch 100 allows one-way transmission of rotation from the motor 44 to the spool 20, as well as the clutch 100 can be made compact and lightweight, and has improved assembling property.

In the above-described embodiment, the rotation of the rotating shaft 50 of the motor 44 is transmitted by the clutch 100 to rotate the spool 20 in the direction in which the webbing is taken up. However, the present invention is not limited to this structure. The rotation of the rotating shaft 50 of the motor 44 may be transmitted by the clutch to rotate the spool 20 in the direction in which the webbing is pulled-out.

### Description of Reference Numerals

10: webbing retractor
20: spool
44: motor
100: clutch
101: clutch case (case)
102: clutch cover (case)
116: gear wheel
124: rotor
144: slider
154: lock bar
182: spring pawl

## Claims

1. A webbing retractor (10) which includes a spool (20), on which webbing for restraining a vehicle occupant is retracted so as to be taken up and pulled out, a motor (44), and a clutch (100) which is mechanically interposed between the motor (44) and the spool (20) for transmitting rotation of the motor (44) to the spool (20) so as to rotate the spool (20) and disconnecting the transmission of the rotation generated at the spool (20) so as to inhibit the rotation to be transmitted to the motor (44),
the clutch (100) comprising:
a case (101);
a rotating body provided coaxially with the spool (20) and rotating relatively with respect to the spool (20), the rotating body rotating when rotation of the motor (44) is transmitted thereto;
a lock bar (154) provided in the rotating body, normally held in a disengaged position with the spool (20), when the rotating body is rotated in one of the axis directions, the lock bar (154) engaging the spool (20) so as to transmit the rotation of the rotating body in the one of the axis directions to the spool (20), and when the rotating body is rotated in the other of the axis directions, the lock bar (154) being moved in a disengaged position and kept there, **characterised in that**
the rotating body is rotatably supported by the case (101) independently of the spool (20);
the webbing retractor (10) further comprising a frame (12) including a pair of leg plates (16, 18) that support the spool (20), and the case (101) is fixed onto one of the leg plates (16).

2. The webbing retractor (10) of claim 1, wherein the clutch (100) transmits rotation of the motor (44) to the spool (20) so as to rotate the spool (20) in the direction in which the webbing is taken up, the clutch (100) further comprising:
a slider (144) which is held on the case (101) through frictional force and thus can move relatively to the rotating body in a predetermined distance; and
the lock bar (154), normally urged in a direction in which it engages the spool (20) and held in a disengaged position with the spool (20) by the slider (144), when the rotating body is rotated in the direction in which the webbing is taken up, the lock bar (154) moving apart from the slider (144) so as to be released from the held state, engaging the spool (20) by the urging force, transmitting the rotation of the rotating body in the direction in which the webbing is taken up to the spool (20), the lock bar (154) permitting relative rotation between the spool (20) and the rotating body in the direction in which the webbing is taken up, when the rotating body is rotated in a direction in which the webbing is pulled out, the lock bar (154) moving toward the slider (144) and is moved to the disengaged position and held there by the slider (144).

3. The webbing retractor (10) of claims 1 or 2, wherein
the rotating body comprises:
a gear wheel (116) which rotates when rotation of the motor (44) is transmitted thereto;
a rotor (124) which supports the lock bar (154); and
a spring pawl (182) which is interposed between the gear wheel (116) and the rotor (124) to
connect them, the spring pawl (182) transmitting rotation of the gear wheel (116) to the rotor (124), when load above predetermined value is applied to the rotor (124), the spring pawl (182) disconnecting the transmission of the rotation between the gear wheel (116) and the rotor (124) by the load and making the gear wheel (116) and the rotor (124) run idle with respect to each other, and
the rotor (124) is supported by the case (101).

## Patentansprüche

1. Gurtbandaufroller (10), der eine Rolle (20), auf der ein Gurtband zum Zurückhalten eines Fahrzeuginsassen aufgerollt ist, um aufgenommen und ausgezogen zu werden, einen Motor (44) und eine Kupplung (100), die mechanisch zwischen den Motor (44) und die Rolle (20) zum Übertragen der Drehung des Motors (44) auf die Rolle (20) einfügt ist, um die Rolle (20) zu drehen und die Übertragung der Drehung, die an der Rolle (20) erzeugt wird, zu unterbrechen, um zu verhindern, dass die Drehung auf den Motor (44) übertragen wird, enthält,
wobei die Kupplung (100) umfasst:
ein Gehäuse (101);
einen Drehkörper, der koaxial mit der Rolle (20) vorgesehen ist und sich relativ in Bezug auf die Rolle (20) dreht, wobei der Drehkörper sich dreht, wenn die Drehung des Motors (44) darauf übertragen wird;
eine Riegelstange (154), die in dem Drehkörper vorgesehen ist und die normalerweise in einer von der Rolle (20) gelösten Position gehalten wird, wobei dann, wenn der Drehkörper in einer der Achsenrichtungen gedreht wird, die Riegelstange (154) in die Rolle (20) eingreift, um die Drehung des Drehkörpers in der einen der Achsenrichtungen auf die Rolle (20) zu übertragen, und dann, wenn der Drehkörper in der anderen der Achsenrichtungen gedreht wird, die Riegelstange (154) in eine gelöste Position bewegt und dort gehalten wird, **dadurch gekennzeichnet, dass**
der Drehkörper unabhängig von der Rolle (20) von dem Gehäuse (101) drehbar getragen wird;
wobei der Gurtbandaufroller (10) ferner einen Rahmen (12) umfasst, der ein Paar von Beinplatten (16, 18) enthält, die die Rolle (20) tragen, und das Gehäuse (101) auf einer der Beinplatten (16) befestigt ist.

2. Gurtbandaufroller (10) nach Anspruch 1, wobei die Kupplung (100) die Drehung des Motors (44) auf die Rolle (20) überträgt, um die Rolle (20) in die Richtung zu drehen, in der das Gurtband aufgenommen wird, wobei die Kupplung (100) ferner umfasst:
einen Gleiter (144), der an dem Gehäuse (101) durch Reibungskraft gehalten wird und sich daher relativ zu dem Körper in einem vorgegebenen Abstand bewegen kann; und
die Riegelstange (154), die normalerweise in eine Richtung gedrängt wird, in der sie in die Rolle (20) eingreift und durch den Gleiter (144) in einer von der Rolle (20) gelösten Position gehalten wird, dann, wenn der Drehkörper in der Richtung gedreht wird, in der das Gurtband aufgenommen wird, sich die Riegelstange (154) von dem Gleiter (144) weg bewegt, um aus dem gehaltenen Zustand gelöst zu werden, in die Rolle (20) durch die Drängkraft eingreift und die Drehung des Drehkörpers in der Richtung, in der das Gurtband aufgenommen wird, auf die Rolle (20) überträgt, wobei die Riegelstange (154) eine relative Drehung zwischen der Rolle (20) und dem Drehkörper in der Richtung ermöglicht, in der das Gurtband aufgenommen wird, und dann, wenn der Drehkörper in eine Richtung gedreht wird, in der das Gurtband ausgezogen wird, sich die Riegelstange (154) zu dem Gleiter (144) hin bewegt und in die gelöste Position bewegt wird und dort durch den Gleiter (144) gehalten wird.

3. Gurtbandaufroller (10) nach Anspruch 1 oder 2, wobei der Drehkörper umfasst:
ein Zahnrad (116), das sich dreht, wenn Drehung des Motors (44) darauf übertragen wird;
einen Rotor (124), der die Riegelstange (154) trägt; und
eine Federklinke (182), die zwischen das Zahnrad (116) und den Rotor (124) eingefügt ist, um
sie zu verbinden, wobei die Federklinke (182) die Drehung des Zahnrads (116) auf den Rotor (124) überträgt, wenn eine Belastung oberhalb eines vorgegebenen Wertes auf den Rotor (124) ausgeübt wird, die Federklinke (182) die Übertragung der Drehung zwischen dem Zahnrad (116) und dem Rotor (124) durch die Belastung unterbricht und bewirkt, dass das Zahnrad (116) und der Rotor (124) in Bezug aufeinander im Leerlauf sind, und
der Rotor (124) durch das Gehäuse (101) getragen wird.

## Revendications

1. Enrouleur de sangle (10) qui inclut une bobine (20) sur laquelle la sangle destinée à retenir l'occupant d'un véhicule est enroulée de manière à être tendue et déroulée, un moteur (44), et un accouplement (100) qui est intercalé mécaniquement entre le moteur (44) et la bobine (20) afin de transmettre la rotation du moteur (44) à la bobine (20) de manière à mettre en rotation la bobine (20) et à déconnecter la transmission de la rotation générée au niveau de la bobine (20) de manière à empêcher que la rotation soit transmise au moteur (44), l'accouplement (100) comprenant:
un boîtier (101);
un corps rotatif fourni coaxialement avec la bobine (20) et tournant relativement par rapport à la bobine (20), le corps rotatif se mettant en rotation lorsque la rotation du moteur (44) est transmise à celui-ci;
une barre de blocage (154) fournie dans le corps rotatif, normalement retenue en position dégagée avec la bobine (20), lorsque le corps rotatif est mis en rotation dans l'une des directions axiales, la barre de blocage (154) s'engageant sur la bobine (20) de manière à transmettre la rotation du corps rotatif dans l'une des directions axiales à la bobine (20), et lorsque le corps rotatif est mis en rotation dans l'autre des directions axiales, la barre de blocage (154) se déplaçant dans une position dégagée et étant maintenue à cet endroit, **caractérisé en ce que**:
le corps rotatif est supporté, en rotation, par le boîtier (101) indépendamment de la bobine (20);
l'enrouleur de sangle (10) comprenant en outre un cadre (12) constitué d'une paire de plaques de patte (16, 18) qui supportent la bobine (20), et le boîtier (101) est fixé sur l'une des plaques de patte (16).

2. Enrouleur de sangle (10) selon la revendication 1, dans lequel l'accouplement (100) transmet la rotation du moteur (44) à la bobine (20) de manière à mettre en rotation la bobine (20) dans le sens dans lequel la sangle est tendue, l'accouplement (100) comprenant en outre:
un coulisseau (144) qui est retenu sur le boîtier (101) par l'intermédiaire d'une force gravitationnelle et ainsi peut se déplacer par rapport au corps rotatif sur une distance prédéterminée; et
la barre de blocage (154), normalement poussée dans un sens dans lequel elle s'engage sur la bobine (20) et est maintenue dans une position dégagée avec la bobine (20) par le coulisseau (144), lorsque le corps rotatif est mis en rotation dans le sens dans lequel la sangle est tendue, la barre de blocage (154) s'éloignant du coulisseau (144) de manière à être libérée de l'état retenu, s'engageant sur la bobine (20) par la force de la poussée, transmettant la rotation du corps rotatif dans le sens dans lequel la sangle est tendue à la bobine (20), la barre de blocage (154) permettant une rotation relative entre la bobine (20) et le corps rotatif dans le sens dans lequel la sangle est tendue, lorsque le corps rotatif est mis en rotation dans le sens dans lequel la sangle est déroulée, la barre de blocage (154) se déplaçant vers le coulisseau (144) et est déplacée dans la position dégagée et retenue dans celle-ci par le coulisseau (144).

3. Enrouleur de sangle (10) selon les revendications 1 ou 2, dans lequel
le corps rotatif comprend:
une roue dentée (116) qui tourne lorsque la rotation du moteur (44) est transmise à celle-ci;
un rotor (124) qui supporte la barre de blocage (154); et
un cliquet à ressort (182) qui est intercalé entre la roue dentée (116) et le rotor (124) pour
les connecter, le cliquet à ressort (182) transmettant la rotation de la roue dentée (116) au rotor (124), lorsqu'une charge supérieure à une valeur prédéterminée est appliquée au rotor (124), le cliquet à ressort (182) déconnectant la transmission de la rotation entre la roue dentée (116) et le rotor (124) par la charge et provoquant le fonctionnement de la roue dentée (116) et du rotor (124) au ralenti l'une par rapport à l'autre, et
le rotor (124) est supporté par le boîtier (101).
